# EUROPÄISCHE PATENTSCHRIFT

(11) **EP 1 920 137 B1**
(45) Veröffentlichungstag und Bekanntmachung des Hinweises auf die Patenterteilung: **27.01.2010**
(21) Anmeldenummer: 05779627.8
(22) Anmeldetag: 18.08.2005
(51) Int. Cl.: E21D 11/38, C09K 3/10

(54) **DICHTANORDNUNG AUS VERSCHIEDENARTIGEN POLYMERWERKSTOFFTYPEN**
SEALING ARRANGEMENT COMPOSED OF DIFFERENT TYPES OF POLYMER MATERIAL
ENSEMBLE D'ETANCHEITE CONSTITUE DE DIFFERENTS TYPES DE MATERIAUX POLYMERES

(43) Veröffentlichungstag der Anmeldung: 14.05.2008
(73) Patentinhaber: Phoenix Dichtungstechnik GmbH, 99880 Waltershausen (DE)
(72) Erfinder: GUTSCHMIDT, Holger, 21629 Neu Wulmstorf (DE); HÖFT, Heiko, 21224 Rosengarten (DE); DIENER, Andreas, 21423 Winsen (DE)
(74) Vertreter: Pohl, Manfred
(86) Internationale Anmeldenummer: PCT/DE2005/001459
(87) Internationale Veröffentlichungsnummer: WO 2007/019812

(56) Entgegenhaltungen:
- EP-A- 0 553 723
- EP-A- 0 811 113
- EP-A- 1 302 626
- WO-A-98/33988
- DE-A1- 10 258 551
- DE-U- 7 432 945
- FR-A- 2 712 655
- US-A- 3 680 270
- PATENT ABSTRACTS OF JAPAN Bd. 1999, Nr. 12, 29. Oktober 1999 (1999-10-29) & JP 11 182685 A (C I KASEI CO LTD), 6. Juli 1999 (1999-07-06)

## Beschreibung

Die Erfindung betrifft eine Dichtanordnung, bestehend wenigstens aus:
- zwei aneinander stoßenden Bauteilen aus Beton, Stahl, Stahlbeton, Gusseisen oder anderen Materialien (z.B. Kunstharze) sowie aus einem Dichtprofil aus polymerem Werkstoff, das den Spalt zwischen den beiden Bauteilen abdichtend überbrückt;
- wobei die Bauteile Segmente sind, die zu einem rohrförmigen Tunnel zusammengesetzt sind, und zwar unter Bildung eines Spaltsystems in Form von Quer- und Längsfugen, wobei jedes Segment an seiner Stoßseite vorzugsweise mit wenigstens einer alle Segmentstoßseiten erfassenden umlaufenden Aussparung versehen ist, wobei sich wiederum in jeder Aussparung ein strangförmig verlaufendes Dichtprofil befindet, und zwar unter Bildung eines Dichtrahmens mit Rahmenecken, wobei das Dichtprofil mit strangförmig verlaufenden offenen und/oder geschlossenen Rillennuten, die an der Profilbasisseite angeordnet sind, sowie mit ebenfalls strangförmig verlaufenden Kanälen, die zwischen den Rillennuten und der Profilstirnseite angeordnet sind, versehen ist.

Da die Segmente zumeist vier Stoßseiten besitzen, besteht der Dichtrahmen aus vier zusammengesetzten Dichtprofilen, wobei die Rahmenecken vorzugsweise nach dem Injection-Molding-Verfahren hergestellt werden (EP 0 578 797 B1, EP 1 141 594 B1).

Eine gattungsgemäße Dichtanordnung ist beispielsweise aus der US 4 946 309, EP 0 441 250 B1 und EP 0 995 013 B1 bekannt. Infolge des Zusammenpressens der aneinander stoßenden Bauteile bzw. Segmente unter Verringerung des Abstandes des Spaltes bzw. der Quer- und Längsfugen entfaltet dann das Dichtprofil aus elastomerem Werkstoff unter der Wechselwirkung von Kraft und Reaktionskraft seine Dichtleistung. Derartige Kompressionsdichtungen haben sich bei zahlreichen Tunnelprojekten bewährt.

Bislang werden derartige Dichtprofile durch Monoextrusion hergestellt, und zwar auf der Basis einer einheitlichen Werkstoffkonzeption.

Es sind jedoch auch Dichtprofile aus zwei oder mehreren verschiedenartigen Polymerwerkstofftypen bekannt. So beschreibt EP 1 302 626 A1 ein Dichtungsprofil für Tunnel-Segmente, das an seinen Flankenseiten abstehende Dichtlippen aufweist, die aus einem wasserquellenden Material bestehen.

Dichtprofile mit sich im Wasser ausdehnendem Material an Stirn- und Seitenteilen sind ebenfalls bekannt (PATENT ABSTRACTS OF JAPAN; Bd. 1999, Nr. 12, 29. Oktober 1999 (1999-10-29) & JP 11 182685 A (C I KASEI CO LTD), 6. Juli 1999 (1999-07-06)).

Darüber hinaus beschreibt US 3,680,270 ein Dichtprofil, das aus verschiedenen Schichten aufgebaut ist, die von der Profilstirnseite bis zur Profilbasisseite reichen und unterschiedliche Elastizitätsmodule aufweisen.

Aus dem Stand der Technik ist jedoch keine Dichtanordnung bekannt, die es ermöglicht, Bedingungen im Tunnelaussen- und Tunnelinnenbereich gesondert zu berücksichtigen.

Im Rahmen einer Weiterentwicklung besteht die Aufgabe der Erfindung darin, eine Dichtanordnung bereitzustellen, wobei die Materialauswahl des Dichtprofiles entsprechend den Anforderungen im Inneren und Äußeren des Tunnelbauwerkes angepasst werden kann.

Erfindungsgemäß besteht die Lösung der gestellten Aufgabe darin, dass zwei co-extrudierte Dichtteile vorhanden sind, die in Bezug auf die Profillängsebene, die senkrecht zur Profilbasisseite bzw. Profilstirnseite verläuft ein Profilaußensegment und Profilinnensegment bilden.

Das Dichtprofil besteht aus zwei oder mehreren co-extrudierten Dichtteilen, die einen Haftverbund bilden, wobei für die Dichtteile wenigstens zwei verschiedenartige Polymerwerkstofftypen zum Einsatz gelangen, die sich gemeinsam durch elastische, jedoch ansonsten durch unterschiedliche mechanische und/oder chemische und/oder biologische Eigenschaften auszeichnen.

Zweckmäßige Ausgestaltungen der Erfindung sind in den Patentansprüchen 2 bis 21 genannt.

Die Erfindung wird nun anhand von Ausführungsbeispielen unter Bezugnahme auf schematische Zeichnungen erläutert. Es zeigen:
- Fig. 1: einen Tunnel, bestehend aus Segmenten sowie Längs- und Querfugen;
- Fig. 2: eine Dichtanordnung mit dem abzudichtenden Spalt zweier angrenzender Tunnel-Segmente gemäß Schnittlinie (Fig. 1);
- Fig. 3, 4, 5: Dichtprofile mit zwei co-extrudierten Dichtteilen;
- Fig. 6, 7: Dichtprofile mit drei co-extrudierten Dichtteilen;
- Fig. 8, 9: Dichtprofile mit mehr als drei co-extrudierten Dichtteilen.

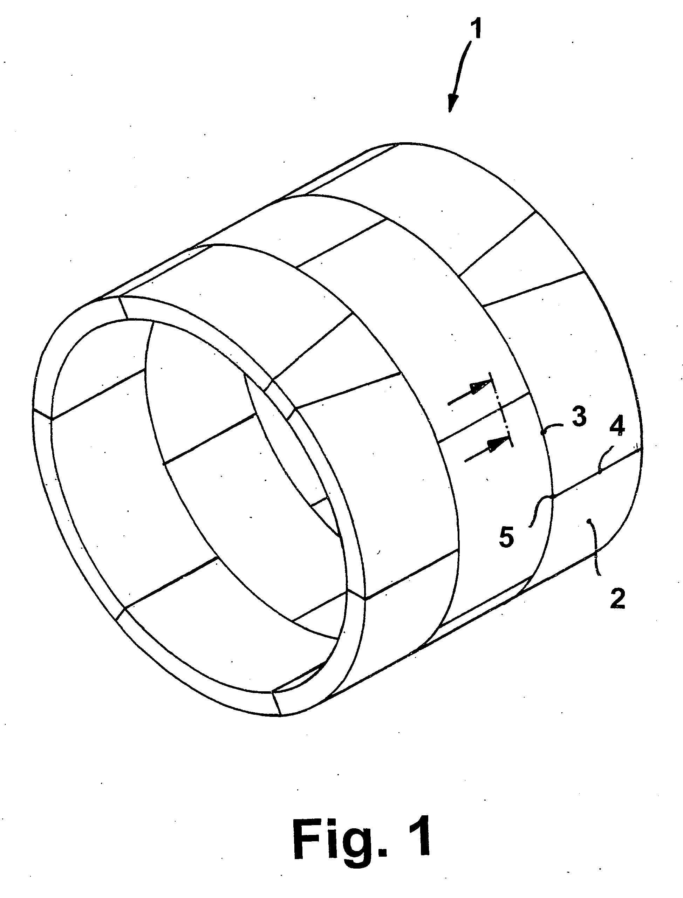

Fig. 1 zeigt einen Tunnel 1, bestehend aus Segmenten 2, und zwar unter Bildung von Quer- und Längsfugen 3 bzw. 4 sowie einer T-Stoßanordnung 5.

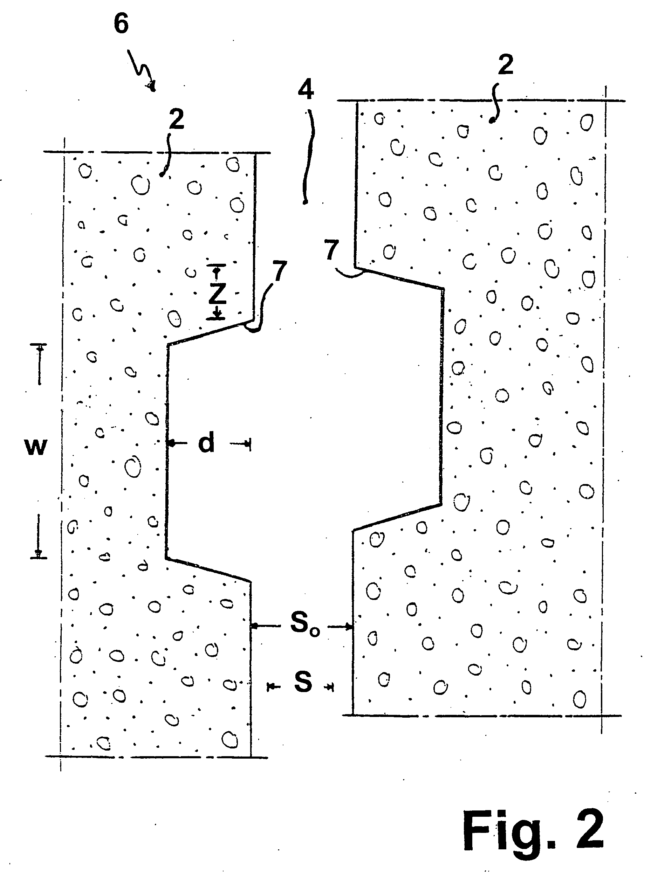

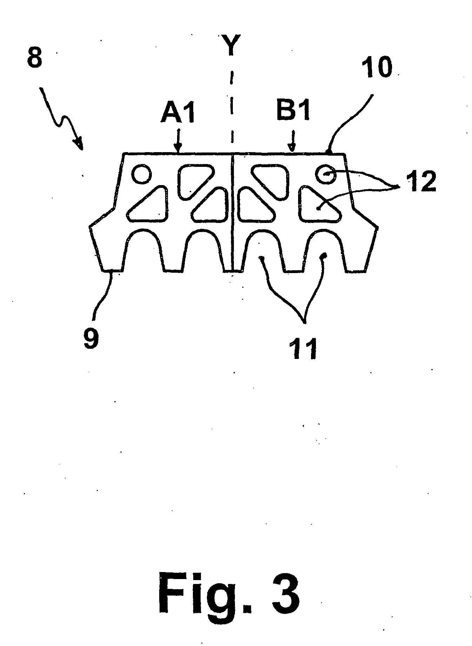

Fig. 2 zeigt eine Dichtanordnung 6 mit zwei aneinander stoßenden Tunnel-Segmenten 2 aus Beton, die jeweils mit einer Aussparung 7 (Tiefe d, Basisbreite w) versehen sind. In diese beiden Aussparungen werden nun Dichtprofile aus polymerem Werkstoff mit elastischen Eigenschaften eingesetzt, wobei auf die Beispiele gemäß Fig. 3 bis 9, die noch näher erläutert werden, verwiesen wird. Die eigentliche Abdichtung des Spaltes (hier in Form der Längsfuge 4) erfolgt durch das Zusammenpressen der gegenüberliegenden Dichtprofile (Kompressionsdichtung), wobei der Spaltabstand von Sₒ auf S verringert wird. Beim Bau von Tunneln muss dabei in Erwägung gezogen werden, dass die Segmente 2 unter einem Versatz Z zueinander angeordnet sind. Dabei wird von den Dichtprofilen erwartet, dass sie auch unter diesem tunnelspezifischen Kriterium ihre Dichtleistung entfalten. Diesbezüglich sind schon zahlreiche Hochleistungsdichtungen entwickelt worden, wobei beispielsweise auf den eingangs zitierten Stand der Technik verwiesen wird. Eine besonders häufig eingesetzte Tunneldichtung ist in der Patentschrift EP 0 441 250 B1 beschrieben.

Fig. 3 zeigt nun ein Dichtprofil 8 aus polymerem Werkstoff, umfassend eine Profilbasisseite 9, die der Aussparungsbreite w (Fig. 2) entspricht, und eine Profilstirnseite 10, die über die Aussparungstiefe d (Fig. 2) herausragt. Das Dichtprofil ist mit strangförmig verlaufend offenen Rillenuten 11 sowie mit ebenfalls strangförmig verlaufenden Kanälen 12 versehen, die zweireihig angeordnet sind (EP 0 441 250 B1).

Das Dichtprofil besteht aus zwei co-extrudierten Dichtteilen A1 und B1, die in Bezug auf die Profillängsebene Y, die senkrecht zur Profilbasisseite 9 bzw. Profilstirnseite 10 verläuft, ein Profilaußensegment und ein Profilinnensegment bilden, die gleich groß sind.

Für die beiden Dichtteile A1 und B1 können Elastomere auf der Basis von Chloropren (CR), Nitrilkautschuk (NBR), Styrol-Butadien-Kautschuk (SBR), eines Ethylen-Propylen-Dien-Mischpolymerisates (EPDM) oder deren Verschnitte (z.B. NBR/SBR) zur Anwendung kommen. Vorteilhafte Elastomerkombinationen sind in der Tabelle 1 festgehalten.

**Tabelle 1**

| Dichtteil A1 oder B1 | Dichtteil B1 oder A1 |
|---|---|
| CR | EPDM |
| NBR | EPDM |
| SBR | EPDM |
| CR | NBR |
| CR | SBR |
| NBR | SBR |

Hier handelt es sich dabei um eine vulkanisierte Kautschukmischung, wobei die oben genannten Kautschuk- bzw. Verschnittkomponenten jeweils zumeist in einem Anteil von 30 bis 70 Gew.-% vorkommen. Die Kautschukmischung weist einen Vernetzer oder Vernetzersystem auf. Das Vernetzersystem umfasst dabei einen Vernetzer und/oder Vulkanisationsaktivator sowie einen Beschleuniger auf. Weitere übliche Mischungsingredienzien, und zwar einzeln oder insbesondere kombinativ, sind Füllstoffe, Verarbeitungshilfsmittel, Weichmacher, Alterungsschutzmittel und Stabilisatoren. Diesbezüglich wird auf den allgemeinen Stand der Kautschukmischungstechnologie verwiesen.

Neben guten elastischen Eigenschaften all dieser Werkstofftypen (CR, NBR, SBR, EPDM) zeichnen sich diese auch durch individuelle Kriterien aus, nämlich Schwerentflammbarkeit (CR), Abriebfestigkeit (SBR), Witterungsbeständigkeit (EPDM) sowie Quellbeständigkeit gegen Öle, Fette und Treibstoffe (NBR).

Auch folgende Werkstoffkombinationen gemäß Tabelle 2 sind anwendbar.

**Tabelle 2**

| Dichtteil A1 oder B1 | Dichtteil B1 oder A1 |
|---|---|
| TPE | TPE |
| Elastomer | TPE |
| TPE | Elastomer |

| | |
|---|---|
| Zweckmäßige Basis der Elastomere sind auch hier CR, NBR, SBR, EPDM oder deren Verschnitte. | |

Was die TPE-Gruppen betrifft, so gelangen vorzugsweise thermoplastische Elastomere auf Styrolbasis (TPE-S), unvernetzte oder teilvernetzte thermoplastische Elastomere auf Olefinbasis (TPE-O) oder vollvernetzte thermoplastische Elastomere auf Olefinbasis (TPE-V) zur Anwendung. Soweit eine Vernetzung vorliegt, was zumeist der Fall ist, ist der wesentliche Bestandteil der Mischungsingredienzien der Vernetzer bzw. das Vernetzersystem. Die übrigen Mischungsingredienzien können alle Rohstoffkomponenten umfassen, die das Eigenschaftsbild des TPE-Werkstoffes positiv beeinflussen. Dies sind zum Beispiel Füllstoffe, Alterungsschutzmittel, Stabilisatoren, Fließhilfsmittel und Prozesshilfsmittel. Diesbezüglich wird auf den allgemeinen Stand der TPE-Technologie verwiesen.

Von besonderer Bedeutung ist ein TPE-Werkstoff, der aus einem verschnitt aus einem thermoplastischen Kunststoff (Thermoplast) und einem mindestens teilvernetzten Kautschuk, insbesondere auf Basis EPDM, besteht. Der bevorzugt eingesetzte Kunststoff ist ein Polypropylen auf der Basis eines Homopolymeren, Copolymeren oder Blockcopolymeren. Der Kautschuk weist einen Vernetzungsgrad von insbesondere > 90 % auf, wobei zum Verstrecken des Kautschuks ein Weichmacher eingesetzt wird. Ansonsten gelten auch hier die oben genannten TPE Mischungsingredienzien. Hinsichtlich Details (z.B. Mengenanteile innerhalb der TPE-Mischung) dieses bevorzugten TPE-Werkstoffes wird auf die Druckschrift DE 103 36 424 A1 verwiesen.

Im Rahmen einer neueren Entwicklung wird den TPE-Werkstoffen zusätzlich ein Oberflächenmodifikator beigemischt, der gleichmäßig an die Oberfläche migriert, und zwar unter Bildung einer durchgehenden, wachsartigen, festen Schicht (DE 103 36 424 A1). Diese Schicht ist glatt und ermöglicht aufgrund des niedrigen Reibungskoeffizienten eine einfache Montage von Dichtungen.

Darüber hinaus ist es bekannt, den Polymerwerkstoffen, insbesondere den Elastomerwerkstoffen, einen aktiven Inhibitor beizumischen, der die Vermehrung von Mikroorganismen verhindert. Dieser mikrobenbeständige Werkstoff mit biologischen Eigenschaften ist bei Dichtprofilen mit Wasserkontakt von Bedeutung. Diesbezüglich wird insbesondere auf die Druckschrift DE 102 58 551 A1 verwiesen, die sich mit einer mikrobenbeständigen Klärbeckenmembran befasst. Die Mikrobenbeständigkeit polymerer Werkstoffe nimmt an Bedeutung zu.

weiterhin sind auch unterschiedliche Härten der einzelnen Dichtteile A1 und B1 möglich, um die gewünschten Stoffeigenschaften zu erzielen. Die Härten können dabei zwischen 50 und 90° Shore variieren. Es ist jedoch ebenso möglich, dass die beiden co-extrudierten Dichtteile die gleiche Härte besitzen, was bei dem Ausführungsbeispiel gemäß Fig. 3 zumeist der Fall ist.

In Bezug auf das Dichtprofil 8 nach Fig. 3 werden im Hintergrund der oben näher vorgestellten Werkstofftechnologie folgende zwei Beispiele genannt, wobei jeweils das Dichtteil A1 dem Tunnelaußenbereich und das Dichtteil B1 dem Tunnelinnenbereich zugewandt ist.
- Führt der Tunnel unterirdisch durch ein Industriegebiet, so ist es zweckmäßig, wenn Dichtteil A1 auf der Basis des ölbeständigen Werkstoffes NBR hergestellt ist, während für das andere Dichtteil B1 ein Werkstoff auf der Basis CR, SBR oder EPDM zur Anwendung kommt.
- Der Tunnel bildet eine Flussunterquerung, so dass das Dichtteil A1 im Gegensatz zu dem Dichtteil B1 mikrobenständig ist, und zwar auf der Basis eines gleichen Grundwerkstoffes (z.B. EPDM) oder zweier verschiedenartiger Werkstoffe (Tabelle 1).

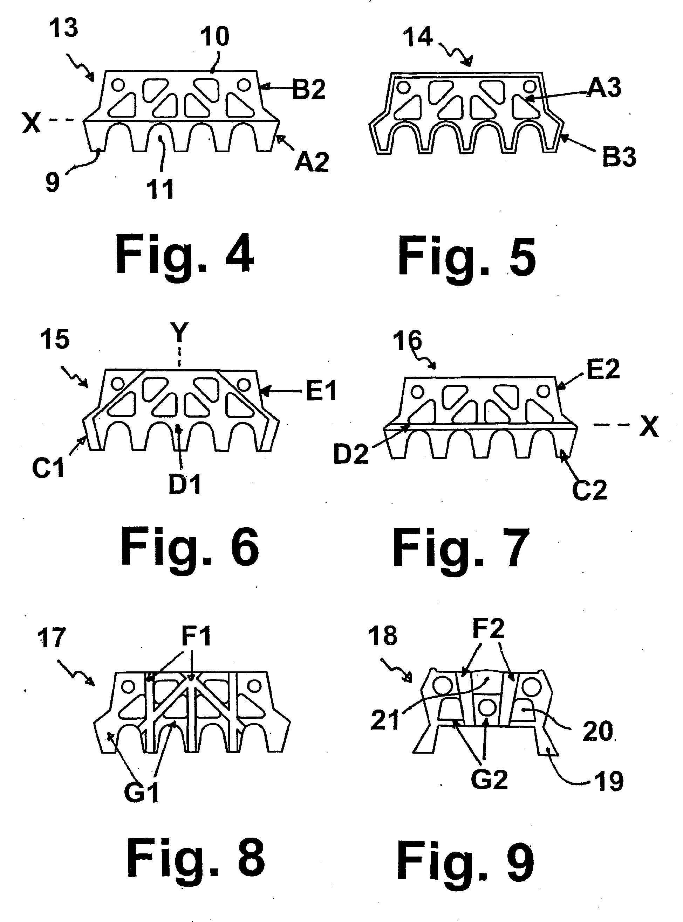

Fig. 4 zeigt ein Dichtprofil 13 mit zwei Dichtteilen A2 und B2, die in Bezug auf die Profillängsebene X, die parallel zur Profilbasisseite 9 bzw. Profilstirnseite 10 verläuft, ein basisseitiges und stirnseitiges Profilsegment bilden. Das basisseitige Profilsegment erfasst dabei ausschließlich die offenen Rillennuten 11.

Bei einem Dichtprofil mit einem derartigen Aufbau bietet sich an, das stirnseitige Dichtteil B2 mit einem TPE-Werkstoff auszurüsten, dem ein Oberflächenmodifikator beigemischt ist, um die Montage zu erleichtern. Das basisseitige Dichtteil A2 besteht dagegen aus einem elastomerem Werkstoff auf der Basis CR, NBR, SBR oder EPDM.

Fig. 5 zeigt ein Dichtprofil 14 mit den Dichtteilen A3 und B3, und zwar unter Ausbildung eines Profilkernsegmentes und Profilhüllensegmentes. Das Profilhüllensegment (Dichtteil B3), das vollständig das Profilkernsegment (Dichtteil A3) ummantelt, ist dabei im Vergleich zum Profilkernsegment von geringerer Stärke, wobei vorzugsweise die Mindeststärke 2 mm beträgt.

Bei einem Dichtprofil gemäß Fig. 5 bietet sich an, beispielsweise ausschließlich das hüllenförmige Dichtteil B3 öl- oder mikrobenbeständig auszurüsten. Außerdem kann das Dichtteil B3 aus einem härteren Material hergestellt werden, so dass dadurch die Dichtung statisch stabiler wird. Damit kann den auf die Dichtung wirkenden Kräften durch die Kompression besser entgegengewirkt werden.

Nach Fig. 6 besteht das Dichtprofil 15 aus drei co-extrudierten Dichtteilen C1, D1 und E1, die in Bezug auf die Profillängsebene Y, die senkrecht zur Profilbasisseite bzw. Profilstirnseite verläuft, zwei Profilrandsegmente und ein Profilinnensegment bilden, wobei die beiden Profilrandsegmente gleich groß sind. Dabei ist es ausreichend, wenn ausschließlich zwei verschiedenartige Polymerwerkstofftypen zur Anwendung kommen, nämlich ein einheitlicher Werkstoff für die beiden Dichtteile C1 und E1. Auch bei einem Dichtprofil gemäß Fig. 6 bietet sich an, beispielsweise ausschließlich die beiden Randdichtteile C1 und E1 öl- oder mikrobenständig auszurüsten. Auch wird es hier möglich, die beiden Randdichtteile aus einem härteren Material herzustellen, und zwar zwecks Stabilisierung der Dichtung.

Fig. 7 zeigt ebenfalls ein Dichtprofil 16 mit drei co-extrudierten Dichtteilen C2, D2 und E2, die in Bezug auf die Profillängsebene X, die parallel zur Profilbasisseite bzw. Profilstirnseite verläuft, ein basisseitiges und stirnseitiges Profilsegment bilden, wobei zwischen diesen beiden Profilsegmenten eine durchgehend und gerade verlaufende Profilstrebe angeordnet ist. Die Profilstrebe hat vorzugsweise eine Mindeststärke von 2 mm.

Die Dichtteile C2 und E2 bestehen aus dem gleichen Werkstoff, und zwar im Gegensatz zu der Profilstrebe (Dichtteil D2). Bei einem derartigen Dichtprofilaufbau bietet sich beispielsweise an, die Profilstrebe härter (60 bis 90° Shore) zu machen als die beiden anderen Dichtteile C2 und E2 (50 bis 80° Shore).

Die Dichtprofile 17 und 18 gemäß Fig. 8 und 9 weisen mehr als drei co-extrudierte Dichtteile auf, gebildet aus einem Profilstrebensystem F1 (Fig. 8) bzw. F2 (Fig. 9) und einem mehrteiligen Profilbasissystem G1 (Fig. 8) bzw. G2 (Fig. 9), dessen einzelnen Profilsegmente durch die Strebenbildung voneinander getrennt sind. Von besonderer Bedeutung ist hier, das Profilstrebensystem, wobei die einzelnen Streben wiederum vorzugsweise eine Mindeststärke von 2 mm aufweisen, härter auszustatten als das Profilbasissystem. Eine derartige Werkstoffdifferenzierung führt zu einem Dichtprofil mit besonders hoher Dichtleistung, insbesondere in Verbindung mit einem fachwerkartigen Strebensystem F1 gemäß Fig. 8.

Das Dichtteil 18 gemäß Fig. 9 ist zusätzlich mit zwei Vezankerungsfüßen 19 ausgestattet (DE 39 34 198 C2). Die Rillennuten 20 sind hier im Gegensatz zu den Dichtprofilen gemäß Fig. 3 bis 8 geschlossen. Der Profilbereich 21 kann ferner mit einer Aufnahmenut für eine Quelldichtung (Notdichtung) ausgestattet sein. Diesbezüglich wird beispielsweise auf die beiden Patentschriften EP 0 807 204 B1 und EP 0 811 113 B1 verwiesen.

Der Haftverbund zwischen den co-extrudierten Dichtteilen, wie sie beispielsweise in den Fig. 3 bis 9 dargestellt sind, wird im Rahmen der Co-Extrusion unter Temperatur und Druck gebildet.

### Bezugszeichenliste

- 1: Tunnel
- 2: Segment
- 3: Querfuge (Ringfuge)
- 4: Längsfuge
- 5: T-Stoßanordnung
- 6: Dichtanordnung
- 7: Aussparung
- 8: Dichtprofil
- 9: Profilbasisseite
- 10: Profilstirnseite
- 11: Rillennuten
- 12: Kanäle
- 13: Dichtprofil
- 14: Dichtprofil
- 15: Dichtprofil
- 16: Dichtprofil
- 17: Dichtprofil
- 18: Dichtprofil
- 19: Verankerungsfuß
- 20: geschlossene Rillennuten
- 21: Profilbereich mit Aufnahmenut für Quelldichtung
- A1, A2, A2: co-extrudierte Dichtteile
- B1, B2, B3: co-extrudierte Dichtteile
- C1, C2: co-extrudierte Dichtteile
- D1, D2: co-extrudierte Dichtteile
- E1, E2: co-extrudierte Dichtteile
- F1, F2: co-extrudierte Dichtteile
- G1, G2: co-extrudierte Dichtteile
- X, Y: Profillängsebenen
- Z: Segmentversatz
- Sₒ: Spaltabstand (vor dem Zusammenpressen)
- S: Spaltabstand (nach dem Zusammenpressen)
- d: Tiefe der Aussparung
- w: Basisbreite der Aussparung

## Patentansprüche

1. Dichtanordnung (6), bestehend wenigstens aus zwei aneinander stoßenden Bauteilen aus Beton, Stahl, Stahlbeton, Gusseisen oder anderen Materialien sowie aus einem Dichtprofil aus polymerem werkstoff, das einen Spalt zwischen den beiden Bauteilen abdichtend überbrückt, wobei die Bauteile Segmente (2) sind, die zu einem rohrförmigen Tunnel (1) zusammengesetzt sind, und zwar unter Bildung eines Spaltsystems in Form von Quer- und Längsfugen (3, 4), wobei jedes Segment an seiner Stoßseite mit wenigstens einer alle Segmentstoßseiten erfassenden umlaufenden Aussparung (7) versehen ist, wobei sich wiederum in jeder Aussparung ein strangförmig verlaufendes Dichtprofil (8) befindet, und zwar unter Bildung eines Dichtrahmens mit Rahmenecken, wobei das Dichtprofil mit strangförmig verlaufenden offenen und/oder geschlossenen Rillennuten (11), die an der Profilbasisseite (9) angeordnet sind, sowie mit ebenfalls strangförmig verlaufenden Kanälen (12), die zwischen den Rillennuten und der Profilstirnseite (10) angeordnet sind, versehen ist und wobei das Dichtprofil (8) aus zwei oder mehreren co-extrudierten Dichtteilen, die einen Haftverbund bilden, besteht, wobei für die Dichtteile wenigstens zwei verschiedenartige Polymerwerkstofftypen zum Einsatz gelangen, die sich gemeinsam durch elastische, jedoch ansonsten durch unterschiedliche mechanische und/oder chemische und/oder biologische Eigenschaften auszeichnen, **dadurch gekennzeichnet, dass** zwei co-extrudierte Dichtteile (A1, B1) vorhanden sind, die in Bezug auf die Profillängsebene (Y), die senkrecht zur Profilbasisseite (9) bzw. Profilstirnseite (10) verläuft, ein Profilaußensegment und Profilinnensegment bilden.

2. Dichtanordnung nach Anspruch 1, **dadurch gekennzeichnet, dass** die beiden Profilsegmente insbesondere gleich groß sind.

3. Dichtanordnung nach Anspruch 1 oder 2, **dadurch gekennzeichnet, dass** das Dichtprofil (8) eine Profilbasisseite (9) aufweist, die der Aussparungsbreite (w) entspricht.

4. Dichtanordnung nach einem der Ansprüche 1 bis 3, **dadurch gekennzeichnet, dass** das Dichtprofil (8) eine Profilstirnseite (10) aufweist, die über die Aussparungstiefe (d) herausragt.

5. Dichtanordnung nach einem der Ansprüche 1 bis 4, **dadurch gekennzeichnet, dass** das Dichtprofil (8) mit strangförmig verlaufend offenen Rillennuten (11) sowie mit ebenfalls standförmig verlaufenden Kanälen (12) versehen ist.

6. Dichtanordnung nach einem der Ansprüche 1 bis 5, **dadurch gekennzeichnet, dass** verschiedenartige Polymerwerkstofftypen, die ausschließlich Elastomere sind, zur Anwendung kommen.

7. Dichtanordnung nach Anspruch 6, **dadurch gekennzeichnet, dass** Elastomere auf der Basis von Chloropren (CR), Nitrilkautschuk (NBR), Styrol-Butadien-Kautschuk (SBR), eines Etylen-Propylen-Dien-Mischpolymerisates (EPDM) oder deren Verschnitte zur Anwendung kommen.

8. Dichtanordnung nach Anspruch 7, **dadurch gekennzeichnet, dass** kombinativ die beiden Elastomere CR und EPDM zur Anwendung kommen.

9. Dichtanordnung nach Anspruch 7, **dadurch gekennzeichnet, dass** kombinativ die beiden Elastomere NBR und EPDM zur Anwendung kommen.

10. Dichtanordnung nach Anspruch 7, **dadurch gekennzeichnet, dass** kombinativ die beiden Elastomere SBR und EPDM zur Anwendung kommen.

11. Dichtanordnung nach Anspruch 7, **dadurch gekennzeichnet, dass** kombinativ die beiden Elastomere CR und NBR zur Anwendung kommen.

12. Dichtanordnung nach Anspruch 7, **dadurch gekennzeichnet, dass** kombinativ die beiden Elastomere CR und SBR zur Anwendung kommen.

13. Dichtanordnung nach Anspruch 7, **dadurch gekennzeichnet, dass** kombinativ die beiden Elastomere NBR und SBR zur Anwendung kommen.

14. Dichtanordnung nach einem der Ansprüche 1 bis 5, **dadurch gekennzeichnet, dass** verschiedenartige Polymerwerkstofftypen, die ausschließlich thermoplastische Elastomere (TPE) sind, zur Anwendung kommen.

15. Dichtanordnung nach Anspruch 14, **dadurch gekennzeichnet, dass** thermoplastische Elastomere (TPE) auf Styrolbasis (TPE-S), unvernetzte oder teilvernetzte thermoplastische Elastomere auf Olefinbasis (TPE-O) oder vollvernetzte thermoplastische Elastomere auf Olefinbasis (TPE-V) zur Anwendung kommen.

16. Dichtanordnung nach Anspruch 14, **dadurch gekennzeichnet, dass** thermoplastische Elastomere (TPE) auf der Basis eines Verschnittes aus einem thermoplastischen Kunststoff und einem mindestens teilvernetzten Kautschuk, insbesondere auf Basis eines Ethylen-Propylen-Dien-Mischpolymerisates (EPDM), zur Anwendung kommen.

17. Dichtanordnung nach einem der Ansprüche 1 bis 5, **dadurch gekennzeichnet, dass** kombinativ Elastomere und thermoplastische Elastomere zur Anwendung kommen.

18. Dichtanordnung nach einem der Ansprüche 1 bis 17, **dadurch gekennzeichnet, dass** die co-extrudierten Dichtteile die gleiche Shore-Härte aufweisen.

19. Dichtanordnung nach einem der Ansprüche 1 bis 17, **dadurch gekennzeichnet, dass** die co-extrudierten Dichtteile verschiedene Share-Härten aufweisen.

20. Dichtanordnung nach einem der Ansprüche 1 bis 19, **dadurch gekennzeichnet, dass** wenigstens das der Wasserseite zugewandte co-extrudierte Dichtteil mikrobenbeständig ist.

21. Dichtanordnung nach einem der Ansprüche 1 bis 20, **dadurch gekennzeichnet, dass** der Haftverbund zwischen den co-extrudierten Dichtteilen im Rahmen der Co-Extrusion unter Temperatur und Druck gebildet ist.

## Claims

1. A sealing arrangement (6) consisting of at least two abutting components of concrete, steel, reinforced concrete, cast iron or other materials, as well as of a sealing profile of polymer material that bridges a gap between the two components in a sealing fashion, wherein the components consist of segments (2) that are assembled into a tubular tunnel (1), namely such that a gap system in the form of transverse joints and longitudinal joints (3, 4) is formed, wherein the abutting side of each segment is provided with at least one peripheral recess (7) that captures all abutting segment sides, wherein a sealing profile (8) that extends in a strand-shaped fashion is situated in each recess, namely such that a sealing frame with frame corners is formed, wherein the sealing profile is provided with open and/or closed grooves (11) that extend in a strand-shaped fashion and are arranged on the profile base side (9), as well as with channels (12) that also extend in a strand-shaped fashion and are arranged between the grooves and the profile face side (10), and wherein the sealing profile (8) consists of two or more co-extruded sealing parts that form an adhesive bond, wherein at least two different types of polymer materials that both have elastic properties, but otherwise different mechanical and/or chemical and/or biological properties are used for the sealing parts, **characterized in that** two co-extruded sealing parts (A1, B1) are provided that respectively form an outer profile segment and an inner profile segment referred to the longitudinal profile plane (Y) that respectively extends perpendicular to the profile base side (9) and the profile face side (10).

2. The sealing arrangement according to Claim 1, **characterized in that** the two profile segments have, in particular, the same size.

3. The sealing arrangement according to Claim 1 or 2, **characterized in that** the sealing profile (8) has a profile base side (9) that corresponds to the recess width (w).

4. The sealing arrangement according to one of Claims 1 to 3, **characterized in that** the sealing profile (8) has a profile face side (10) that protrudes over the recess depth (d).

5. The sealing arrangement according to one of Claims 1 to 4, **characterized in that** the sealing profile (8) is provided with open grooves (11) that extend in a strand-shaped fashion, as well as with channels (12) that also extend in a strand-shaped fashion.

6. The sealing arrangement according to one of Claims 1 to 5, **characterized in that** different types of polymer materials are used that are exclusively elastomers.

7. The sealing arrangement according to Claim 6, **characterized in that** elastomers on the basis of chloroprene (CR), nitrile-butadiene rubber (NBR), styrene-butadiene rubber (SBR), an ethylene-propylenedien copolymer (EPDM) or their blends are used.

8. The sealing arrangement according to Claim 7, **characterized in that** the two elastomers CR and EPDM are used in combination.

9. The sealing arrangement according to Claim 7, **characterized in that** the two elastomers NBR and EPDM are used in combination.

10. The sealing arrangement according to Claim 7, **characterized in that** the two elastomers SBR and EPDM are used in combination.

11. The sealing arrangement according to Claim 7, **characterized in that** the two elastomers CR and NBR are used in combination.

12. The sealing arrangement according to Claim 7, **characterized in that** the two elastomers CR and SBR are used in combination.

13. The sealing arrangement according to Claim 7, **characterized in that** the two elastomers NBR and SBR are used in combination.

14. The sealing arrangement according to one of Claims 1 to 5, **characterized in that** different types of polymer materials are used that are exclusively thermoplastic elastomers (TPE).

15. The sealing arrangement according to Claim 14, **characterized in that** thermoplastic elastomers (TPE) on the basis of styrene (TPE-S), non-cross-linked or partially cross-linked thermoplastic elastomers on the basis of olefin (TPE-O) or fully cross-linked thermoplastic elastomers on the basis of olefin (TPE-V) are used.

16. The sealing arrangement according to Claim 14, **characterized in that** thermoplastic elastomers (TPE) on the basis of a blend of a thermoplastic polymer and an at least partially cross-linked rubber, particularly on the basis of an ethylene-propylenedien copolymer (EPDM), are used.

17. The sealing arrangement according to one of Claims 1 to 5, **characterized in that** elastomers and thermoplastic elastomers are used in combination.

18. The sealing arrangement according to one of Claims 1 to 17, **characterized in that** the co-extruded sealing parts have the same Shore hardness.

19. The sealing arrangement according to one of Claims 1 to 17, **characterized in that** the co-extruded sealing parts have a different Shore hardness.

20. The sealing arrangement according to one of Claims 1 to 19, **characterized in that** at least the co-extruded sealing part that faces the water side is resistant to microbes.

21. The sealing arrangement according to one of Claims 1 to 20, **characterized in that** the adhesive bond between the co-extruded sealing parts is formed under the influence of temperature and pressure during the course of the co-extrusion.

## Revendications

1. Structure d'étanchéité (6), consistant dans au moins deux éléments constitutifs jointifs en béton, en acier, en béton armé, en fonte ou en d'autres matériaux ainsi que dans un profilé d'étanchéité en une matière polymère, qui recouvre en le colmatant un interstice entre les deux éléments constitutifs, les éléments constitutifs étant des segments (2), qui sont assemblés en un tunnel tubulaire (1), à savoir en formant un système d'interstices sous forme de joints transversaux et longitudinaux (3, 4), chaque segment étant muni sur son côté jointif d'au moins un évidement (7) périphérique, englobant tous les côtés jointifs du segment, un profilé d'étanchéité (8) s'étendant quant à lui en forme de cordon dans chaque évidement, à savoir en formant un cadre d'étanchéité avec des angles de cadre, le profilé d'étanchéité étant muni de rainures striées (11) ouvertes et/ou fermées s'étendant en forme de cordon, qui sont disposées sur le côté de la base du profilé (9), ainsi que de canaux (12) s'étendant également en forme de cordon, qui sont disposés entre les rainures striées et la face frontale du profilé (10), et le profilé d'étanchéité (8) consistant dans deux ou dans plusieurs éléments d'étanchéité co-extrudés, qui forment une liaison par adhérence, au moins deux différents types de matières polymères qui se distinguent par des caractéristiques élastiques communes, mais par ailleurs par différentes caractéristiques chimiques et/ou biologiques étant utilisés pour les éléments d'étanchéité, **caractérisée en ce que** deux éléments d'étanchéité co-extrudés (A1, B1) sont présents, qui par rapport au plan longitudinal du profilé (Y) qui s'étend à la perpendiculaire du côté de la base du profilé (9) ou de la face frontale du profilé (10) forment un segment extérieur du profilé et un segment intérieur du profilé.

2. Structure d'étanchéité selon la revendication 1, **caractérisée en ce que** les deux segments de profilé sont de dimension identique.

3. Structure d'étanchéité selon la revendication 1 ou 2, **caractérisée en ce que** le profilé d'étanchéité (8) comporte un côté de base du profilé (9) qui correspond à la largeur de l'évidement (w).

4. Structure d'étanchéité selon l'une quelconque des revendications 1 ou 3, **caractérisée en ce que** le profilé d'étanchéité (8) comporte une face frontale du profilé (10) qui saillit par-dessus la profondeur de l'évidement (d).

5. Structure d'étanchéité selon l'une quelconque des revendications 1 à 4, **caractérisée en ce que** le profilé d'étanchéité (8) est muni de rainures striées (11) ouvertes s'étendant en forme de cordon, ainsi que de canaux (12) s'étendant également en forme de cordon.

6. Structure d'étanchéité selon l'une quelconque des revendications 1 à 5, **caractérisée en ce que** différents types de matières polymères qui sont exclusivement des élastomères sont utilisés.

7. Structure d'étanchéité selon la revendication 6, **caractérisée en ce que** des élastomères sur base de chloroprène (CR), de caoutchouc nitrile (NBR), de caoutchouc butadiène-styrène (SBR), d'un produit de polymérisation mixte éthylène-propylène-diène (EPDM) ou leurs coupages sont utilisés.

8. Structure d'étanchéité selon la revendication 7, **caractérisée en ce que** les deux élastomères CR et EPDM sont utilisés en combinaison.

9. Structure d'étanchéité selon la revendication 7, **caractérisée en ce que** les deux élastomères NBR et EPDM sont utilisés en combinaison.

10. Structure d'étanchéité selon la revendication 7, **caractérisée en ce que** les deux élastomères SBR et EPDM sont utilisés en combinaison.

11. Structure d'étanchéité selon la revendication 7, **caractérisée en ce que** les deux élastomères CR et NBR sont utilisés en combinaison.

12. Structure d'étanchéité selon la revendication 7, **caractérisée en ce que** les deux élastomères CR et SBR sont utilisés en combinaison.

13. Structure d'étanchéité selon la revendication 7, **caractérisée en ce que** les deux élastomères NBR et SBR sont utilisés en combinaison.

14. Structure d'étanchéité selon l'une quelconque des revendications 1 à 5, **caractérisée en ce que** différents types de matières polymères, qui sont exclusivement des élastomères thermoplastiques (TPE) sont utilisés.

15. Structure d'étanchéité selon la revendication 14, **caractérisée en ce que** des élastomères thermoplastiques (TPE) à base de styrène (TPE-S), des élastomères thermoplastiques non réticulés ou partiellement réticulés à base d'oléfines (TPE-O) ou des élastomères thermoplastiques entièrement réticulés sur base d'oléfines (TPE-V) sont utilisés.

16. Structure d'étanchéité selon la revendication 14, **caractérisés en ce que** des élastomères thermoplastiques (TPE) sur la base d'un coupage d'une matière thermoplastique et d'un caoutchouc au moins partiellement réticulé, notamment à base d'un produit de polymérisation mixte éthylène-propylène-diène (EPDM), sont utilisés.

17. Structure d'étanchéité selon l'une quelconque des revendications 1 à 5, **caractérisée en ce que** des élastomères et des élastomères thermoplastiques sont utilisés en combinaison.

18. Structure d'étanchéité selon l'une quelconque des revendications 1 à 17, **caractérisée en ce que** les éléments d'étanchéité co-extrudés présentent la même dureté Shore.

19. Structure d'étanchéité selon l'une quelconque des revendications 1 à 17, **caractérisée en ce que** les éléments d'étanchéité co-extrudés présentent différentes duretés Shore.

20. Structure d'étanchéité selon l'une quelconque des revendications 1 à 19, **caractérisée en ce qu'**au moins l'élément d'étanchéité dirigé vers le côté eau est micro-résistant.

21. Structure d'étanchéité selon l'une quelconque des revendications 1 à 20, **caractérisée en ce que** la liaison par adhérence entre les éléments d'étanchéité co-extrudés est créée dans le cadre de la co-extrusion, sous température et sous pression.
